# EUROPEAN PATENT APPLICATION

(11) **EP 2 315 121 A1**
(43) Date of publication of application: **27.04.2011**
(21) Application number: 10178133.4
(22) Date of filing: 22.09.2010
(51) Int. Cl.: G06F 9/50

(54) **Methods and apparatus for management of software applications**

(30) Priority: 16.10.2009 US 580773
(71) Applicant: Ricoh Company Ltd., Tokyo 143-8555 (JP)
(72) Inventor: Nuggehalli, Jayasimha, Cupertino,, CA 95014 (US); Hong, Jiang, Cupertino,, CA 95014 (US); Lu, Zhenyu, Cupertino,, CA 95014 (US); Luo, Guiluan, Cupertino,, CA 95014 (US); Vulugundam, Revathi, Cupertino,, CA 95014 (US)
(74) Representative: Schwabe - Sandmair - Marx

(57) **Abstract**

Methods and apparatus for flexible management of applications provided by one or more application service providers and accessible to one or more client devices such as multi-function devices (e.g., MFPs). A management system registers new applications by recording in a database application information provided by the application service provider. Client devices may then request a menu of all available applications and may subscribe to one or more provided applications by interaction with the management system by transmitting subscription information to the management system. The management system then receives usage information from the service provider for usage of a subscribed application by the client device. The management system records the usage information and may produce reports upon request from the recorded usage information. The application information may include pricing model information such that the management system may provide accounting reports for accumulated usage and related charges therefore.

## Description

### BACKGROUND OF THE INVENTION

### 1. Field of the Invention

The invention relates generally to enterprises using networked applications and more specifically relates to methods and apparatus for flexible and simplified management of software applications (such as Software As A Service - SAGAS) used by client devices such as a multi-function device (e.g., a multi-function printer, scanner, copier device).

### 2. Discussion of Related Art

A number of software vendors provide their software products as a service that may be accessed via a network connection between a client system and a server system. The server system provides the application software (some times as a service - e.g., SAAS) to one or more client systems accessing the server through the intermediate network (e.g., the Internet or an enterprise intranet) . In general, a client system contacts an appropriate server system that provides a desired application software as a service and commences utilizing the application software in cooperation between the client system and the server system.

Recent developments by Lexmark Corporation have extended the concept of software as a service to multi-function devices coupled to a server system through an intermediate network (i.e., the Internet). As used herein, multi-function device refers to any device that provides a combination of printing, scanning, and/or copying functions and typically includes some form of user interface integral within the multi-function device for interacting with a user of the device. Multi-function devices are also frequently referred to as multi-function printers or simply MFP devices.

Lexmark Corporation recently announced a feature for some of its MFP product family referred to as "Smart Solutions". In the Smart Solutions environment defined by Lexmark, each Lexmark Smart Solutions compliant MFP device may be configured to subscribe to any of a plurality of SAAS applications available on a centralized Lexmark server. The central server of the Lexmark Smart Solutions architecture controls what SAAS applications are available to a compliant MFP regardless of who is presently using the MFP device. Thus, although each MFP could be configured to subscribe to a different set of SAAS applications, all users of a Lexmark Smart Solutions MFP are provided with the identical set of SAAS application solutions. Further, the collection of supported SAAS applications is defined exclusively by Lexmark. SAAS applications are tested by Lexmark and configured for distribution from the Lexmark server to Lexmark Smart Solutions compliant MFP devices. As noted, in the Lexmark solution, each MFP device must be individually configured for the particular SAAS application to be accessible on that MFP device. Further, additional SAAS applications must be provided only by Lexmark through their proprietary, confidential interface standards. SAAS application providers cannot therefore easily add new SAAS application to the Lexmark Smart Solutions architecture without cooperation from Lexmark Corporation.

Thus, it is an ongoing challenge to provide flexibility in the management of SAAS applications available to a plurality of client devices without requiring each device to be individually configured.

### SUMMARY OF THE INVENTION

The present invention solves the above and other problems, thereby advancing the state of the useful arts, by providing methods and apparatus for flexible management of software applications provided by one or more application service providers and accessible to one or more client devices such as multi-function devices (e.g., MFPs). A management system registers new software applications by recording in a database application information provided by the software application service provider. Client devices may then request a menu of all available applications and may subscribe to one or more provided applications by interaction with the management system by transmitting subscription information to the management system. The management system then receives usage information from the service provider for usage of a subscribed application by the client device. The management system records the usage information and may produce reports upon request from the recorded usage information. The application information may include pricing model information such that the management system may provide accounting reports for accumulated usage and related charges therefore.

One aspect hereof provides a method operable in a computing system for managing software applications. Another aspect provides a computer readable medium embodying the method. The method comprises receiving, in the computing system, a software application registration request from an application service to register a software application. The request including application information regarding the application. The method further comprises recording, by operation of the computing system, the application information in a database associated with the computing system. The method also includes receiving, in the computing system, a request from a client device to subscribe to the application. The subscription request including subscription information identifying the client device and the application to be subscribed. The method also records, by operation of the computing system, the subscription information in the database. The method further includes receiving, in the computing system, usage information regarding use of the application by the client device and recording, by operation of the computing system, the usage information in the database in association with the application information for the application and in association with the subscription information for the client device. The method further comprises outputting a report based on usage information in the database.

Another aspect hereof provides a software application management computing system. The system comprises an application provider interface adapted to exchange application information with an application service. The application information including: available application information identifying a software application available from an application provider; and usage information regarding use of a software application by an identified client device. The system further comprises a client device interface adapted to exchange subscription information with a client device. The subscription information including one or more of: subscription request information received by the management system from a client device identifying a software application that the client device desires to subscribe; or available application information generated by the management system and transmitted to the client device, the available application information indicating applications available to the client device for subscription. The system also comprises a storage device coupled with the application provider interface and with the client device interface. The storage device storing a database adapted to store information derived from one or more of: the application information or the subscription request information. The system further comprises a report generator coupled with the storage device and with the application provider interface. The report generator adapted to generate a report derived from information in the database and to transmit the generated report to an application service.

### BRIEF DESCRIPTION OF THE DRAWING

The same reference number represents the same element or same type of element on all drawings.
FIG. 1 is a block diagram of an exemplary software application management system in accordance with features and aspects hereof to flexibly manage SAAS applications provided by a service provider for use by a client device.
FIG. 2 is a block diagram of another exemplary software application management system in accordance with features and aspects hereof to flexibly manage software applications provided by a service provider for use by a client device.
FIGS. 3 through 7 are flowcharts describing exemplary methods for providing flexible management of software applications provided by a service provider for use by a client device.
FIG. 8 is an exemplary screen display for a menu of software applications that may be accessed by a user of a client device.
FIG. 9 is a block diagram of a software application management computing system on which a computer readable medium may be used to receive program instructions for a method to provide flexible management of software applications.

### DETAILED DESCRIPTION OF THE EMBODIMENTS

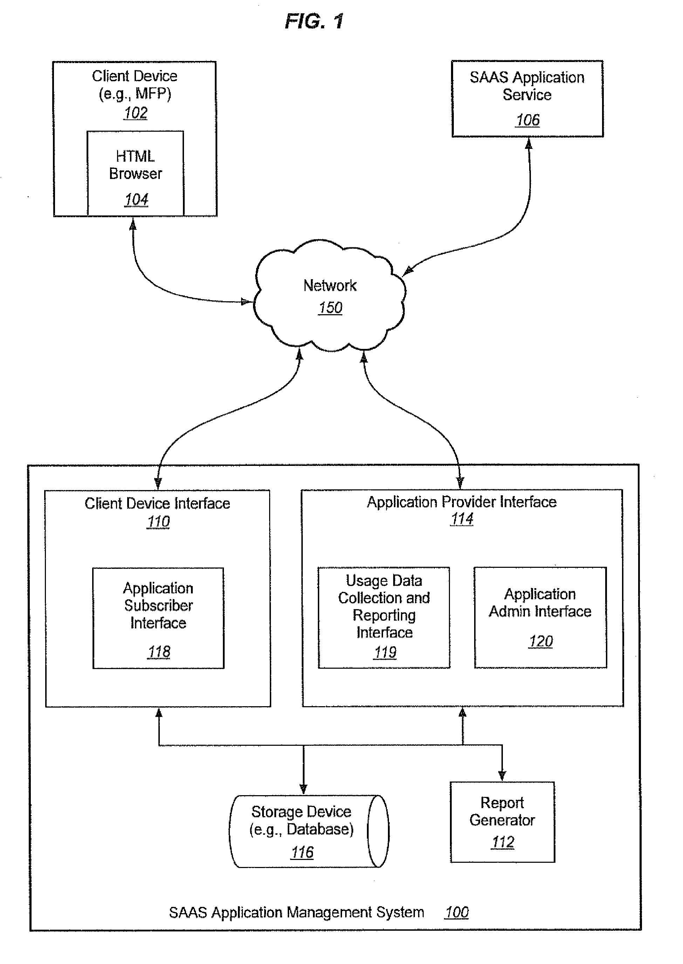

FIGS. 1 through 9 and the following description depict specific exemplary embodiments of the present invention to teach those skilled in the art how to make and use the invention. For the purpose of this teaching, some conventional aspects of the invention have been simplified or omitted. Those skilled in the art will appreciate variations from these embodiments that fall within the scope of the present invention. Those skilled in the art will appreciate that the features described below can be combined in various ways to form multiple variations of the present invention. As a result, the invention is not limited to the specific embodiments described below, but only by the claims and their equivalents.

FIG. 1 is a block diagram of an exemplary SAAS application management system 100 enhanced in accordance with features and aspects hereof to provide flexible management of SAAS applications provided from one or more SAAS application services 106 for use by one or more client devices 102. System 100 includes client device interface 110 for exchanging information with client device 102 via network 150 and includes application provider interface 114 for exchanging information with application service 106 via network 150. Network 150 may be any suitable network connection including, for example, appropriate coupling to the Internet or coupling to an enterprise's intranet. Further, there can be any number of SAAS application services 106 coupled to management system 100 through network 150. In like manner, any number of client devices 102 coupled to management system 100 through network 150.

Client device 102 may be any device adapted for utilizing a SAAS application provided by the SAAS application service 106. In particular, client device 102 may be a multi-function device (often referred to as a multi-function printer or MFP). SAAS application service 106 may be any suitable computing device that provides one or more software applications as a service for use by one or more client devices 102. In general, client device 102 and SAAS application service 106 communicate directly through network 150 (or other suitable communication media) performing the functions of a particular SAAS application program.

Management system 100 may be any suitable computing device capable of coupling with network 150 to exchange application information with SAAS application service 106 (via application provider interface 114) and to exchange subscription information with client device 102 (via client device interface 110).

In general, application information exchanged between SAAS application service 106 and management system 100 may include information identifying, or otherwise associated with, one or more available application programs available from an application provider operating SAAS application service 106. In particular, an application administration interface 120 may interact with an administrative user associated with the application service provider to register a new application available from the provider and to provide other information regarding the newly defined application. In addition, SAAS application service may provide usage information to management system 100 through usage data collection and reporting interface 119. The usage information received from application service 106 by interface 119 may indicate whether a particular feature of the application has been used by a client device and/or may indicate the amount of a particular feature that was used by a client device. Usage data collection and reporting interface 119 may also receive a request from an application service 106 (or from an administrative user) to generate and return a report regarding usage of one or more software applications by one or more client devices. The reports are generated by report generator 112 as discussed below.

In general, subscription information exchanged between management system 100 and client device 102 may include one or more of: subscription request information or available application information. Subscription request information represents a request by the client device to subscribe to an identified SAAS application. Such a subscription request may identify the client device (e.g., by IP address or other suitable indicia) and the application to which the identified client device wishes to subscribe. The application to be subscribed may be identified by any suitable identifier including, for example, an application ID provided earlier by the management system 100 to the client device 102.

Available application information is generated by management system 100 and transmitted to the client device 102 through client device interface 110 and the application subscription interface 118. The available application information may include, for example, a list of available applications from one or more SAAS application services 106. For each available application, an application ID may be provided to the client device 102 as well as name information, cost information, a graphical logo to represent the application, etc. In one exemplary embodiment, the available application information may be provided as an HTML page to be displayed by a suitable HTML browser 104 operable within the client device 102 or otherwise associated with the client device 102.

Information regarding available applications and regarding subscriptions by identified client devices to one or more applications may be stored in storage device 116 of management system 100. Storage device 116 generally stores such information in a database to allow rapid, indexed access to the information based on client device identification, application identification, and/or other key indicia. Storage device 116 may be, for example, a disk drive or other suitable mass storage device for managing such information in a reliable, secure storage. The database on storage device 116 may also utilized for storing usage information including revenue information pertaining to usage of an identified application by an identified client device.

Management system 100 further includes a report generator module 112 operable in response to requests for reports received through the application provider interface 114 via application admin interface 120 or through client interface 110. A request for a report may request any of a variety of standard report formats including, for example, usage of one or more applications by one or more identified client devices, revenues associated with such usage, etc.

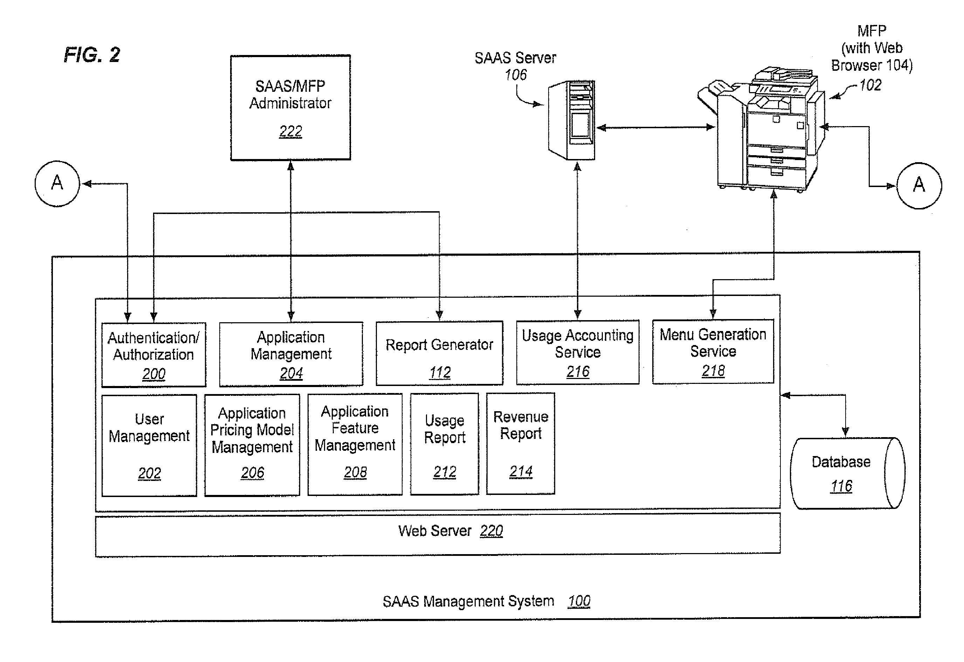

FIG. 2 is a block diagram depicting another exemplary embodiment of SAAS management system 100 providing additional details of an exemplary modular decomposition within management system 100. As above with respect to FIG. 1, management system 100 may be coupled with an application service 106 and MFP 102 (which, in turn, includes a Web browser 104). As noted above, the coupling of management system 100 to application service 106 and/or MFP 102 may utilize any suitable connectivity including, for example, Internet connectivity. Report generator 112 within management system 100 generates requested reports based on information stored in the database when 16.

Management system 100 may also be coupled with a SAAS/MFP administrator 222 utilizing any suitable interactive communication with an administrative user. An authentication/authorization module 200 provides for secure login for the administrative user 222. In addition, authentication/authorization module 200 may provide secure login capabilities to authenticate a user of MFP 102 interacting through Web browser 104. Once authenticated through authorization/authentication module 200, administrative user 222 may perform user management functions utilizing user management module 202 to create and modify information regarding users of management system 100. Users may include authorized administrators for purposes of defining new SAAS applications and/or user information. Users of MFP 102 may authenticate through module 200 to gain access to management system 100 for purposes of subscribing to available SAAS applications. An authenticated administrative user 222 may also utilized application management module 204 to interact with application pricing model management module 206 and application feature management module 208. Application pricing model management module 206 provides the administrative user with interaction to create a pricing model to be associated with usage tracking units defined for a particular application. In like manner, application feature management module 208 may be utilized by an authenticated administrative user through application module 204 to define tracking units of usage to be monitored and recorded. The user information defined through user management module 202, pricing model information defined through application pricing model management module 206, and application features defined by application feature management module 208 may all be stored in database 116 for use by other modules within management system 100.

An authenticated administrative user 222 or an authenticated use of MFP 102 may interact through report generator 212 to generate a usage report utilizing usage report module 212 and/or a revenue report utilizing revenue report module 214. Usage report module 212 and revenue report module 214 retrieve information from database 116 to generate and return a requested report from report generator 112 to a requesting administrative user 222 or user of MFP 102.

Menu generation service 218 utilizes information in database 116 regarding applications available through management system 100. Based on authentication/authorization information obtained through module 200 from the MFP 102, menu generation service 218 may provide a menu of available SAAS application for a particular identified client device, for a particular group of users, or for a particular individual user of MFP 102. The menu generated by menu generation service 218 may include a menu of all of available SAAS applications when so requested by MFP 102 and/or may include a menu of only those applications presently subscribed by the MFP 102 based on the authenticated user and/or group ID received from MFP 102. These and other menus may be generated based on information stored in database 116 and provided to MFP 102 in response to a request from MFP 102.

Usage accounting service 216 receives usage information from SAAS application service 106 indicating tracked units of usage detected by service 106 in providing the application for use by MFP 102. Usage accounting information received from SAAS service 106 may include, for example, identification of the particular application, identification of the particular unit of usage (e.g., the name or ID of the "tracking unit"), identification of the particular client device (e.g., MFP 102 as identified by its IP address or other suitable indicia), identification of a particular user and/or group of users generating the particular usage report usage information, etc.

Exemplary details of the information exchanged between management system 110 administrative user 222 and service 106 or between management system 100 and MFP 102 are discussed further herein below. Numerous additional and equivalent modules may be present in a particular embodiment of management system 100. Further, fewer or more modules may be defined within management system 100 in any particular modular decomposition of exemplary embodiments as a matter of design choice. Thus, the system of FIGS. 1 and 2 are intended merely as exemplary of possible embodiments in accordance with features and aspects hereof.

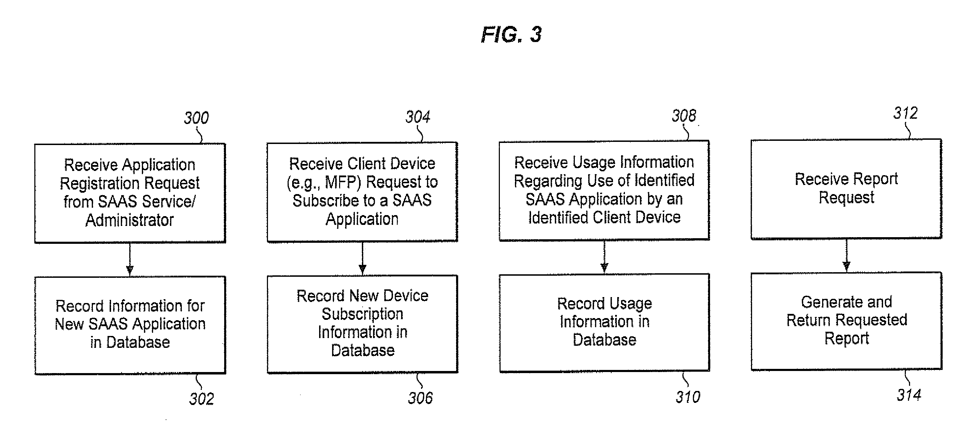

FIG. 3 provides a flowchart describing methods operable in the management system 100 of FIGS. 1 and 2. In general, the management system is responsive to exchanges with client devices and/or application services as well as administrative users configuring the management system. The various requests and responses may be encoded in any suitable protocols including, for example, HTML pages communicated utilizing HyperText Transfer Protocol HTTP exchanges.

Step 300 represents receipt of an application registration request received in the management system from a SAAS service and/or an administrative user. A new application may be registered with the management system by providing information regarding the new application. The information provided may include, for example, an application name, a description, one or more URLs representing the resource location for the service provider as well as other URLs relating to help information for the application and promotional information regarding the application. Other application information may include a version identifier, a release date, an application logo or graphic to be used as an iconic representation of the application, etc. Further information regarding an application may be provided by an application service and/or administrative user such as tracking unit information identifying units of usage to be tracked by the management system. Still further application information may include pricing model information associated with a tracking unit to identify cost to be assessed a user based on usage information provided to the management system. Step 302 then records the provided application information for the new SAAS application in the database of the management system. An application ID may be generated by the management system as a key value to allow rapid access to the information regarding the newly defined application. This generated application ID may be provided to the application service and utilized to provide further information such as usage information as the associated application is utilized by the client device.

Step 304 represents receipt of a client device request to subscribe to an available SAAS application. As described elsewhere in this application, the client device user may be provided a menu of applications to be utilized. In one embodiment, the menu may provide an HTML page identifying applications that the user may subscribe to and/or identifying applications that the user has already subscribed. The user of the client device may then request subscription to one of the presented, available applications on the HTML page or may simply access a previously subscribed application through the URL for the service provider. For example, the client device may be a multi-function device (e.g., MFP) with an integrated Web browser that displays the provided HTML menu information. The user may then request from the management system that the client device be subscribed to an identified application. Once the user has subscribed to an identified application the user may utilize the SAAS application by interacting directly with the application service provider (e.g. , through the URL associated with the application provider). Step 306 then records the new device subscription information in the database associated with the management system.

Step 308 represents receipt of usage information from the application service regarding use of an identified SAAS application by an identified client device (and/or an authenticated user of the client device). The client device interacts directly with the application service provider to utilize a subscribed application. The application service provider then transmits usage information to the management system to permit the management system to account for usage and any associated cost with the indicated usage. Step 310 then records the received usage information in the database. The recorded usage information may then be utilized to generate reports regarding the usage and associated revenues for an identified application.

Step 312 represents receipt of a report request from an application service provider and/or from a client device (e.g., an authenticated user of the MFP or an administrative user for the service provider). The received report request may request reporting of usage for a particular application or for any number of SAAS applications managed by the management system. Further, the report request may indicate that reported usage and/or revenues for the identified application or applications be limited to particular users or groups of users. Step 314 then generates the requested report and returns the generated report to the requestor. The requested report may also be generated, for example, as an HTML page to be presented on a suitable Web browser of the requesting user. The request may be generated by an administrative user authorized and authenticated for use of the management system and/or may be generated automatically by the server computing system of the application service provider.

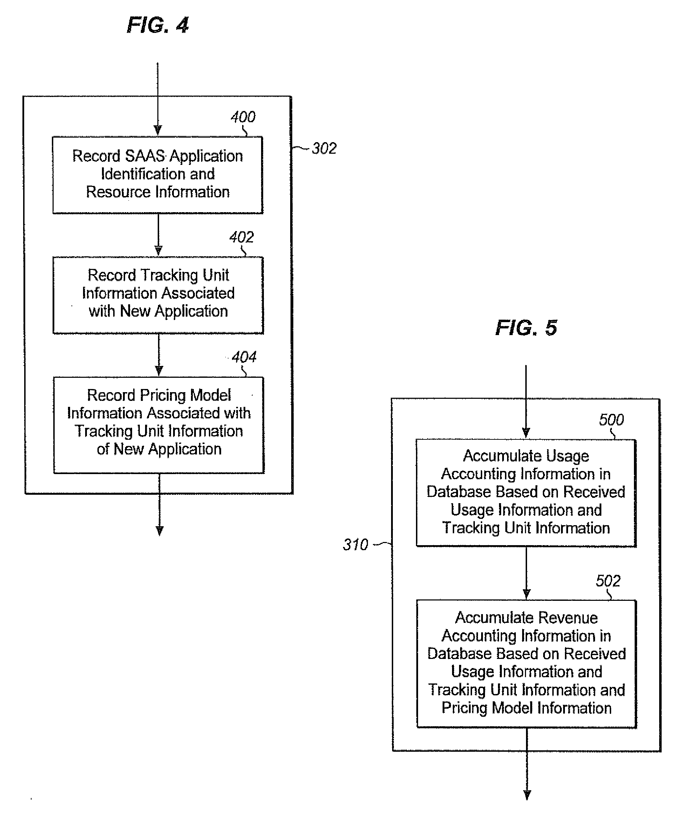

FIG. 4 is a flowchart providing exemplary additional details of the processing of step 302 of FIG. 3 to record application information in the management system database. Step 400 represents processing by the management system to record the basic identification information for a newly defined SAAS application to be managed by the management system (e.g., the application name, description, and service provider URL). The application service provider provides such information either through an administrative user interacting with the management system or may provide the same information through an automated application programming interface (API) utilized by the server computing system of the application service provider. Step 402 records received tracking unit information associated with the newly defined application. The tracking unit information may be associated with the application by use of the application ID generated by the management system when recording the application information in the management system database. Tracking unit information identifies any unit of information associated with the usage of the application. For example, an application may choose to identify a number of pages printed and/or scanned by an MFP device as a unit of information to be tracked by the management system. Or, for example, the resolution of a printed or scanned image may be defined as a unit of usage to be tracked. Or, for example, telephone usage associated with a fax transmission may be defined as a unit of usage to be tracked. The administrative user interface and/or management API provided by the management system allows any type of tracking unit to be defined by the user of the management system. Each tracking unit may be identified by a name, a description, and a type of unit to be tracked. For example, the type of unit to be tracked may be a simple Boolean value indicating that a particular feature was used or not used. Or, for example, a type of tracking unit may be an integer value indicating an amount of a particular feature used by the client device in interacting with the application service. Step 404 then records received pricing model information associated with an identified tracking unit of the newly defined application. The pricing model information may be associated with the tracking unit by a tracking unit ID generated by the management system or simply by the tracking unit name provided by the user of the management system in step 402. The pricing model information associates costs with usage of an associated application. For example, the pricing model may be associated with one or more identified tracking units provided by step 402. For example, a user may identify a number of pages printed or scanned by the client device as a tracking unit in step 402 and in step 404 may indicate that there is a base price for usage of any number of pages plus an additional cost per page.

FIG. 5 is a flowchart describing exemplary additional details of the operation of step 310 of FIG. 3 to record usage information in the management system received from an application service. An API provided by the management system allows the application service to transmit usage information to the management system for recording in the management system database. The recorded usage information may then be used to provide an accounting of usage and/or revenues associated with such usage. Reports may be generated response is to a request from an administrative user of the management system and/or from automated requests generated by client device or the service provider using the API. Step 500 represents processing to accumulate usage accounting information in the database based on received usage information and tracking unit information previously recorded in the database. The received usage information may identify the name or other ID of a previously defined tracking unit and may indicate the amount of usage of the identified tracking unit. As exemplified above, a number of pages printed or scanned may be identified as a tracking unit in the management system database and the usage information may indicate the number of such pages utilized by the client device in interacting with the application service. Step 502 then represents processing within the management system to accumulate revenue accounting information in the database based on received usage information, the tracking unit information recorded in the database, and the pricing model information recorded in the database. As exemplified above the pricing model information may indicate a base charge for a tracking unit (e. g. , printing or scanning of any number of pages) plus a per unit charge for each unit of usage (e.g., for each page scanned and/or printed).

The tracking unit information and associated pricing model information may track and account for any defined unit of usage desired by the application service provider. Thus, the usage information received simply identifies a previously defined tracking unit and an amount of usage of the associated tracking unit. Based on the previously recorded tracking unit information associated with an identified application and the previously recorded pricing model information associated with that tracking unit, the management system may perform accounting for the usage and revenues associated with any unit of usage desired by any SAAS application.

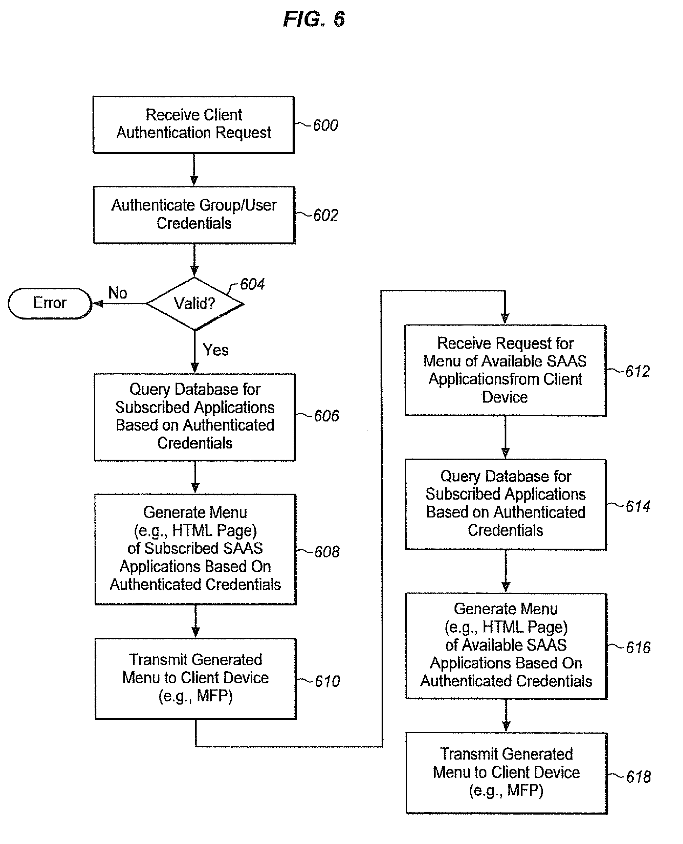

FIG. 6 is a flowchart describing another exemplary method operable within the management system to interact with client devices for generating a menu of applications to be presented to a user of the client device. As noted above, the client device may be a multi-function device (e.g., MFP) with an integral Web browser. Thus, the generated menus may be generated as HTML pages and presented to a user of the client device through the Web browser integrated within the client device.

Step 600 represents processing of the management system to receive a client authentication request. In one exemplary embodiment, a user may login to the client device by providing a user ID, and/or a group ID, or other suitable indicia of the user's identity. Step 602 then authenticates the identified group or user credentials by examining user information previously stored in the management system database. Passwords, encryption keys, or other suitable security means may be utilized to secure the authentication process. Step 604 then determines whether the provided group or user credentials have been authenticated in the management system database. If not, an appropriate error condition is returned to the client device to so indicate. If step 604 determines that the received credentials are authentic, step 606 queries the management system database for SAAS applications previously subscribed by the identified, authenticated group or user. Step 608 then generates a menu (e.g., an HTML page) of SAAS applications previously subscribed by the authenticated group or user credentials. Step 610 then transmits the generated menu to the client device for presentation thereon.

An authenticated user of a client device may also request a menu of all available SAAS applications. Step 612 therefore represents receipt of a request from a client device requesting a menu of all available SAAS applications. Step 614 then queries the database of the management system to identify all subscribed applications for the authenticated, identified group or user. Step 616 then generates a menu (e.g., HTML page) of all available SAAS applications for the identified group or user. Step 618 then transmits the generated menu to the client device for presentation thereon.

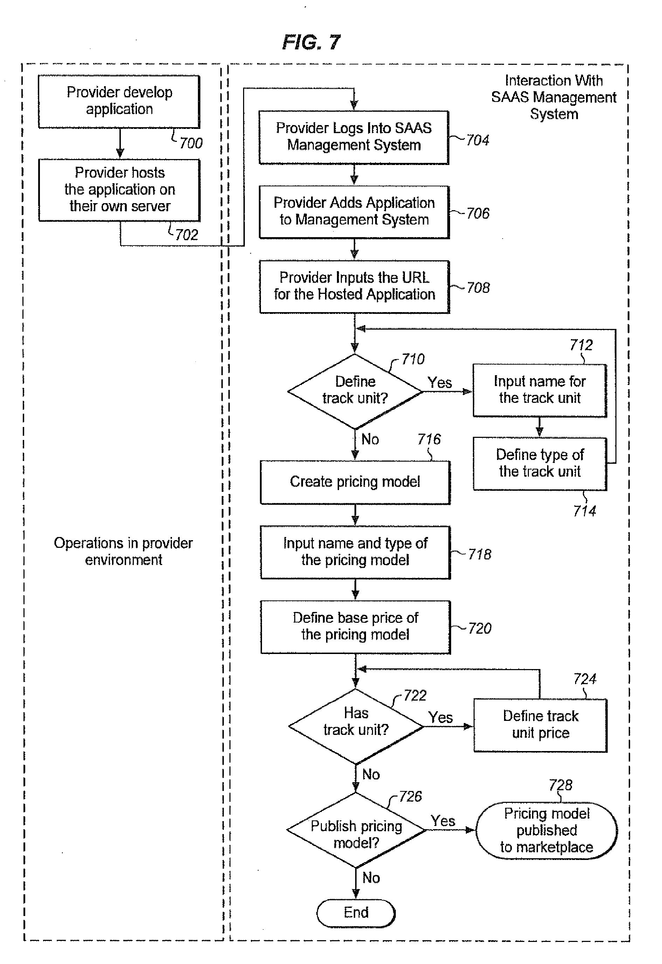

FIG. 7 is a flowchart describing another exemplary method generally operable in the management system of FIGS. 1 and 2. Prior to operation of the management system, an application developer at step 700 develops an application in accordance with the API standards for application registration and usage tracking by the management system. The provider then hosts the application as indicated at step 702 on an appropriate server computing system external to the management system (and coupled with the management system via the Internet or through an enterprise's intranet). Having so developed and hosted a new application, the application provider starts interacting with the SAAS management system at step 704 by logging into the SAAS management system. The administrative user may interact with the SAAS management system utilizing any suitable graphical and/or textual user interface. Appropriate passwords and/or encryption key technology may be used to secure the user login information. At step 706 the administrative user of the service provider adds basic information regarding the new application to the management system database. The new application is added by providing minimum identification information such as a name and description for the new application. At step 708 the administrative user of the provider inputs additional information regarding the application. The additional information may include, for example, a URL for the hosted application server. Other information may also be provided by the administrative user such as URLs for additional help information and/or promotional information. Still other application information may be provided such as a revision number and release date of the new application.

Steps 710 through 714 are then iteratively operable to allow the administrative user to define one or more tracking units. For each tracking unit to be defined, the provider's administrative user inputs a name for the tracking unit at step 712 and defined a type for the tracking unit at step 714. As noted above, the name may be any name desired by the administrative user and the type may be, for example, a Boolean tracking unit or an integer tracking unit. A Boolean tracking unit may be defined for a feature that is either used or not used by a client device utilizing the new application. An integer tracking unit may be defined for a unit of usage for which the amount of usage is to be accumulated. Other types of tracking unit information may be defined as desired by the administrative user of the application service provider. Processing continues looping back to step 710 until the administrative user has completed definition of all tracking unit information. Step 716 then creates a pricing model for the newly defined application. At step 718 the administrative user for the service provider inputs a name and type for the pricing model. At step 720 a base price of the pricing model may be defined. A base price may be defined as a price to be assessed, for example, if the application is ever used by the client device of for each use of the application. Steps 722 through 724 are then iteratively operable to define a tracking unit price or cost for each of one or more of the tracking units previously defined by the administrative user. For each tracking unit for which the administrative user desires to associate a tracking unit cost or price, step 724 is operable to allow the user to input a tracking unit cost or price to be associated with an identified tracking unit. When all desired tracking unit prices are defined by the administrative user, step 726 is next operable to determine whether the administrative user is ready to publish the new application and its associated pricing model. If the user chooses to publish the information, step 728 publishes the new application thereby allowing the newly defined application to be provided in a list or menu of available applications to any client device accessing the management system. If the user chooses not to presently publish the pricing model, the application may be defined within the management system but not yet made available to any client device. The administrative user may return to the management system later to publish the previously defined new application and its associated pricing model.

Those of ordinary skill in the art will readily recognize numerous additional and equivalent steps in the methods of FIGS. 3 through 7. Such additional and equivalent steps are omitted herein for simplicity and brevity of this discussion.

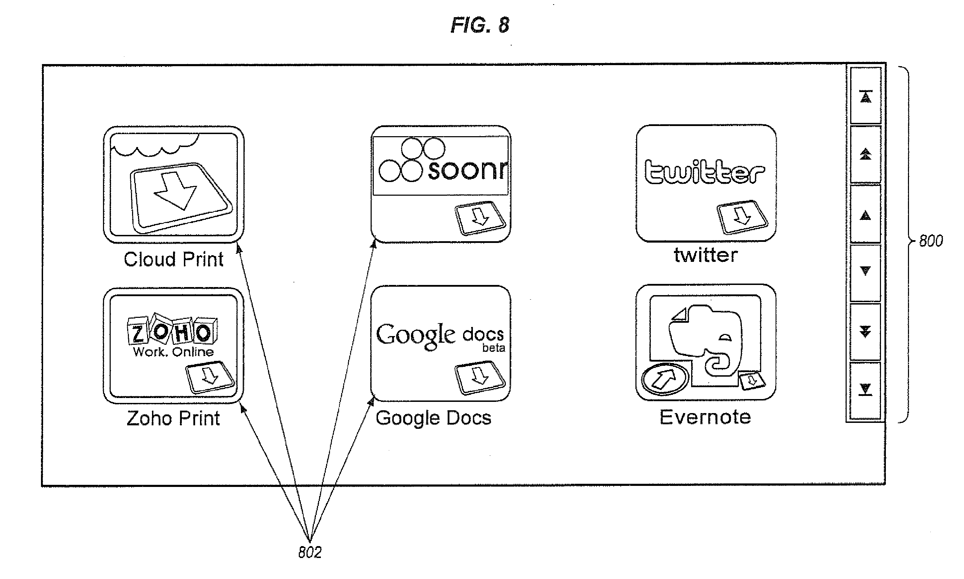

FIG. 8 is an exemplary display screen presented by a Web browser of an MFP client device. The menu is generated as an HTML page by the management system as discussed above. The exemplary screen depicts a menu with a plurality of available applications 802 and menu control functions 800 on the side of the screen. For each available application, an application name may be presented in association with a graphical icon representing the available application. Utilizing the control buttons 800, a user of the MFP may scroll through multiple such pages of available applications. The menu of FIG. 8 may also represent presently subscribed applications of the client device. The particular subscribed applications and/or available applications may be determined based on the identity of the user or group logged into the client device utilizing the authentication and authorization features of the management system. Thus, each individual user or group of users may be presented with only those applications to which they presently subscribed or that are presently available for subscription by the identified user or group of users.

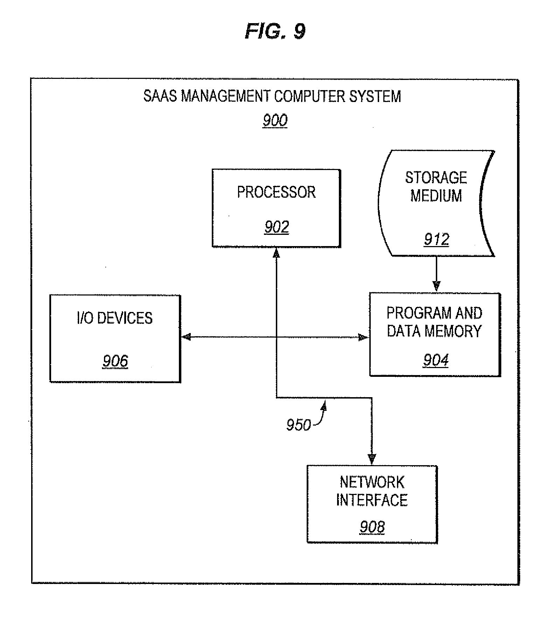

Embodiments of the invention can take the form of an entirely hardware embodiment, an entirely software embodiment or an embodiment containing both hardware and software elements. In one embodiment, the invention is implemented in software, which includes but is not limited to firmware, resident software, microcode, etc. FIG. 9 is a block diagram depicting a SAAS management computer system 900 adapted to provide features and aspects hereof by executing programmed instructions and accessing data stored on a computer readable storage medium 912.

Furthermore, embodiments of the invention can take the form of a computer program product accessible from a computer-usable or computer-readable medium 912 providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A SAAS management computer system 900 suitable for storing and/or executing program code will include at least one processor 902 coupled directly or indirectly to memory elements 904 through a system bus 950. The memory elements 904 can include local memory employed during actual execution of the program code, bulk storage, and cache memories which provide temporary storage of at least some program code in order to reduce the number of times code must be retrieved from bulk storage during execution.

Input/output or I/O devices 906 (including but not limited to keyboards, displays, pointing devices, etc) can be coupled to the system either directly or through intervening I/O controllers. Network adapter interfaces 908 may also be coupled to the system to enable the SAAS management computer system 900 to be coupled with other data processing systems or storage devices through intervening private or public networks. Modems, cable modems, IBM Channel attachments, SCSI, Fibre Channel, and Ethernet cards are just a few of the currently available types of network or host interface adapters.

Although specific embodiments were described herein, the scope of the invention is not limited to those specific embodiments. The scope of the invention is defined by the following claims and any equivalents thereof.

## Claims

1. A method operable in a computing system for managing software applications, the method comprising:
receiving, in the computing system, a software application registration request from an application service to register a software application, the request including application information regarding the application;
recording, by operation of the computing system, the application information in a database associated with the computing system;
receiving, in the computing system, a request from a client device to subscribe to the application, the subscription request including subscription information, identifying the client device and the application to be subscribed;
recording, by operation of the computing system, the subscription information in the database;
receiving, in the computing system, usage information regarding use of the application by the client device;
recording, by operation of the computing system, the usage information in the database in association with the application information for the application and in association with the subscription information for the client device; and
outputting a report based on usage information in the database.

2. A software application management computing system comprising:
an application provider interface adapted to exchange application information with an application service, the application information including:
available application information identifying a software application available from an application provider; and
usage information regarding use of a software application by an identified client device;
a client device interface adapted to exchange subscription information with a client device, the subscription information including one or more of:
subscription request information received by the management system from a client device identifying a software application that the client device desires to subscribe; or
available application information generated by the management system and transmitted to the client device, the available application information indicating applications available to the client device for subscription;
a storage device coupled with the application provider interface and with the client device interface, the storage device storing a database, the database adapted to store information derived from one or more of: the application information or the subscription request information; and
a report generator coupled with the storage device and with the application provider interface, the report generator adapted to generate a report derived from information in the database and to transmit the generated report to an application service.

3. The system of claim 2,
wherein the client device interface further includes a menu generator adapted to generate a menu of applications for display on the client device, the menu including information regarding one or more applications based on information in the database, the client device interface further adapted to transmit the generated menu to the client device,
wherein the applications include Software As A Service (SAAS) applications.

4. The system of claim 3,
wherein the generated menu comprises a HyperText Markup Language (HTML) page for displaying applications available for the client device to subscribe, the menu generated based on application information in the database.

5. The system of claim 3,
wherein the generated menu comprises a HyperText Markup Language (HTML) page for displaying applications to which the client device is presently subscribed, the menu generated based on subscription information in the database and based on application information in the database.

6. The system of claim 2,
wherein the available application information further comprises:
tracking unit information describing a unit of usage information,
wherein the application provider interface is further adapted to generate an accounting of usage of the application based on received usage information and based on the tracking unit information,
wherein the applications include Software As A Service (SAAS) applications.

7. The system of claim 6,
wherein the available application information further comprises:
pricing model information describing a price associated with the tracking unit,
wherein the application provider interface is further adapted to generate an accounting of revenue of the application based on received usage information and based on the pricing model information.
